# EUROPÄISCHE PATENTSCHRIFT

(11) **EP 2 427 878 B1**
(45) Veröffentlichungstag und Bekanntmachung des Hinweises auf die Patenterteilung: **31.07.2019**
(21) Anmeldenummer: 10721389.4
(22) Anmeldetag: 05.05.2010
(51) Int. Cl.: G09F 13/04, G09F 21/04, B60Q 1/26, F21V 21/00, G07B 13/04, B60Q 1/50

(54) **DACHANZEIGEVORRICHTUNG FÜR FAHRZEUGE**
ROOF DISPLAY DEVICE FOR VEHICLES
DISPOSITIF DE SIGNALISATION DE TOIT POUR VÉHICULES

(30) Priorität: 05.05.2009 DE 102009019703
(43) Veröffentlichungstag der Anmeldung: 14.03.2012
(73) Patentinhaber: Kienzle Argo GmbH, 12103 Berlin (DE)
(72) Erfinder: SCHULZE GRONOVER, Ludwig, 32756 Detmold (DE); WEDDEMANN, Heribert, 59558 Lippstadt (DE); BRANDHERM, Rolf, 33449 Langenberg (DE); SCHMIDT, Joachim, 10587 Berlin (DE); MAGERMANS, Marcel, NL-2498 Den Haag (NL)
(74) Vertreter: Ostermann, Thomas
(86) Internationale Anmeldenummer: PCT/EP2010/056086
(87) Internationale Veröffentlichungsnummer: WO 2010/128074

(56) Entgegenhaltungen:
- EP-A2- 0 917 985
- EP-A2- 2 006 826
- WO-A1-98/15940
- DE-A1- 4 234 399
- DE-U1-202007 007 614
- DE-U1-202007 007 614
- DE-U1-202007 012 557

## Beschreibung

Die Erfindung betrifft eine Dachanzeigevorrichtung für Fahrzeuge nach dem Oberbegriff des Patentanspruchs 1.

Aus der DE 10 2008 014 711 A1 ist eine Dachanzeigevorrichtung für Fahrzeuge bekannt, wobei ein Dachanzeigekörper über eine Halteeinrichtung an einem Dachbereich des Fahrzeugs lösbar befestigt ist. Der Dachanzeigekörper kann als Dachzeichen ein Taxizeichen aufweisen, das das Wort "TAXI" beinhaltet. Der das Taxizeichen enthaltende Taxidachanzeigekörper ist über einen langgestreckten Tragarm an einem Fuß der Halteeinrichtung befestigt. Dadurch, dass die bekannte Dachanzeigevorrichtung über lediglich einen einzigen Fuß verfügt, kann die Montage bzw. Demontage des Dachanzeigekörpers an dem Fahrzeug relativ schnell und ohne Beschädigung einer Lackschicht erfolgen. Der Dachanzeigekörper beschränkt sich jedoch - wie es auch aus der DE 10 2007 014 190 A1 bekannt ist - auf die Visualisierung des Taxizeichens "TAXI". Üblicherweise ist in dem Dachanzeigekörper eine Lichtquelle integriert, so dass bei eingeschalteter Lichtquelle das Taxidachzeichen beleuchtet und zur Signalisierung des Funktionszustands "frei" des Taxifahrzeugs und bei ausgeschalteter Lichtquelle das nicht beleuchtete Taxidachzeichen den Funktionszustand "besetzt" signalisiert. Sofern der Funktionszustand des Taxis durch andere oder zusätzliche Anzeigemittel, wie beispielsweise rote Leuchtfläche für den Funktionszustand "besetzt" und grüne Leuchtfläche für den Funktionszustand "frei" gewünscht sind, muss der Dachanzeigekörper einen anderen Aufbau bzw. eine andere Dimension aufweisen. Nachteilig hieran ist, dass der Dachanzeigekörper für unterschiedliche nationale oder lokale Einsatzzwecke einen unterschiedlichen Aufbau aufweisen muss.

Aus der EP 0 917 985 A2 ist eine Dachanzeigevorrichtung bekannt, die Anzeigekörper auf weist, innerhalb derer eine Trägerplatte zur Aufnahme von Lichtquellen vorgesehen ist. Die Lichtquellen befinden sich lediglich auf einer Flachseite der Trägerplatte.

Aus der EP 2 006 826 A2 ist eine Dachanzeigevorrichtung für Fahrzeuge bekannt, die einen Hauptanzeigekörper mit einem Hauptdachzeichen zur Signalisierung einer Hauptfunktion und einen Zusatzanzeigekörper mit einem Zusatzdachzeichen zur Signalisierung einer Zusatzfunktion aufweist. Das Hauptdachzeichen und das Zusatzdachzeichen sind senkrecht zueinander angeordnet. Der Zusatzanzeigekörper ist stirnseitig an dem Hauptanzeigekörper befestigt. Mittels einer Halteeinrichtung ist der so gebildete Dachanzeigekörper an einem Dach eines Fahrzeugs befestigt.

Aufgabe der vorliegenden Erfindung ist es, eine Dachanzeigevorrichtung für Fahrzeuge derart weiterzubilden, dass der Herstellungs- und Montageaufwand für eine Anzahl von unterschiedlichen Dachanzeigemitteln verringert wird.

Zur Lösung dieser Aufgabe weist die Erfindung die Merkmale des Patentanspruchs 1 auf.

Der besondere Vorteil der Erfindung besteht darin, dass durch den erfindungsgemäßen Aufbau eines Dachanzeigekörpers bestehend aus einem Hauptanzeigekörper und mindestens einem Zusatzanzeigekörper eine Modularität der Dachanzeigevorrichtung geschaffen wird, so dass in Abhängigkeit von lokalen oder nationalen Vorgaben auf einfache Weise unterschiedliche Aufbauten von Dachanzeigekörpern bereitstellbar sind. Der erfindungsgemäße Dachanzeigekörper weist einen Hauptanzeigekörper auf, der die Basisinformationen für die Funktion des Dachanzeigekörpers trägt bzw. aufweist. Der Hauptanzeigekörper ist derart ausgebildet, dass in Abhängigkeit von den länderspezifischen Anforderungen ein weiterer Zusatzanzeigekörper ansetzbar und verbindbar ist, wobei der Zusatzanzeigekörper weitere länderspezifische Zusatzdachzeichen (Zusatzinformationen) trägt bzw. aufweist. Die miteinander verbundenen Hauptanzeigekörper und Zusatzanzeigekörper bilden eine den Informationsgehalt erhöhende gemeinsame Baueinheit. Nach der Erfindung ist der Hauptanzeigekörper mit dem Zusatzanzeigekörper an zueinander gekehrten Randseiten miteinander formschlüssig und/oder kraftschlüssig und/oder stoffschlüssig verbunden. In Abhängigkeit von dem Einsatzzweck können der Hauptanzeigekörper und der Zusatzanzeigekörper bereits bei der Herstellung der Dachanzeigevorrichtung oder nach erfolgtem Einsatz derselben zusammengefügt werden. Ist bei Herstellung der Dachanzeigevorrichtung noch nicht klar, welcher Typ von Zusatzanzeigekörper zum Einsatz kommen soll, kann vorzugsweise an dem Hauptanzeigekörper ein als funktionslose Blende ausgebildeter Zusatzanzeigekörper angebracht werden. In Abhängigkeit von dem Einsatzort der Dachanzeigevorrichtung kann dann später diese Blende durch angepasste Zusatzanzeigekörper ersetzt werden. Für unterschiedliche Einsatzzwecke der Dachanzeigevorrichtung ist es somit ausreichend, lediglich die Zusatzanzeigekörper auszutauschen, ohne dass der gesamte Dachanzeigekörper ausgetauscht werden müsste. Nach der Erfindung ist der Zusatzanzeigekörper als eine Kappe ausgebildet, die an einem stirnseitig des Hauptanzeigekörpers verlaufenden Halter befestigt ist. Ränder der Kappen schließen bündig an dem Hauptanzeigekörper oder dem Halter an, so dass eine Verlängerung des vorzugsweise langgestreckten Hauptanzeigekörpers eintritt, ohne dass das homogene Erscheinungsbild der Dachanzeigevorrichtung beeinträchtigt wird.

Nach einer Weiterbildung der Erfindung sind der Hauptanzeigekörper und der Zusatzanzeigekörper quaderförmig ausgebildet, wobei sie an gegenüberliegenden Flachseiten mit dem Hauptdachzeichen bzw. Zusatzdachzeichen versehen sind. Vorzugsweise ist innerhalb des Hauptanzeigekörpers und/oder des Zusatzanzeigekörpers eine schaltbare Lichtquelle angeordnet, so dass in Abhängigkeit vom Funktionszustand des Dachanzeigekörpers unterschiedliche Funktionsinformationen visualisiert werden. Vorzugsweise ist das Hauptdachzeichen und/oder das Zusatzdachzeichen als Leuchtzeichen ausgebildet, wobei Funktionsinformationen durch den Grad einer Beleuchtung oder durch eine farbliche Beleuchtung signalisiert werden.

Nach einer Weiterbildung der Erfindung kann durch Schalten von Leuchtmitteln das Zusatzdachzeichen synchron zu dem Hauptdachzeichen in einen anderen Signalisierungszustand verbracht werden. Handelt es sich bei dem Dachanzeigekörper um einen Taxizeichenkörper, kann mittels des Zusatzdachzeichens eine Verstärkung der signalisierten Funktionsinformation erfolgen. Befindet sich der Hauptanzeigekörper durch Beleuchtung des Hauptdachzeichens in einem Funktionszustand "frei", kann dieser Funktionszustand durch Ausbildung des Zusatzdachzeichens als grün beleuchtete Leuchtfläche verstärkt werden. Befindet sich der Hauptanzeigekörper im Funktionszustand "besetzt", kann dieser durch eine als in roter Farbe beleuchtete Leuchtfläche des Zusatzdachzeichens unterstützt werden.

Nach einer Weiterbildung der Erfindung ist das Zusatzdachzeichen unabhängig von dem Hauptdachzeichen in einen Signalisierungszustand schaltbar. Das Zusatzdachzeichen kann beispielsweise zur Vermittlung von Zusatzinformationen dienen. Während das Hauptdachzeichen den Funktionszustand "besetzt" oder "frei" signalisiert, kann das Zusatzdachzeichen unterschiedliche Taxitarife signalisieren. Diese Taxitarife können abhängig sein vom Ort des Taxifahrzeugs und/oder von der Tageszeit.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Vorderansicht einer Dachanzeigevorrichtung für Fahrzeuge nach einer ersten Ausführungsform,
- Figur 2: eine Vorderansicht der Dachanzeigevorrichtung nach einer zweiten Ausführungsform und
- Figur 3: eine Vorderansicht einer Dachanzeigevorrichtung nach einer dritten Ausführungsform.

Eine Dachanzeigevorrichtung 1 für Fahrzeuge kann beispielsweise für Taxi-, Polizei-, Notarzt-, Feuerwehrfahrzeuge oder dergleichen eingesetzt werden.

In den nachfolgend beschriebenen Ausführungsbeispielen werden Dachanzeigevorrichtungen für Taxifahrzeuge beschrieben, die mittels einer Halteeinrichtung 2 oberhalb eines Fahrzeugdaches 3 positionierbar sind. Die Dachanzeigevorrichtung 1 weist neben der Halteeinrichtung 2 einen Dachanzeigekörper 4 auf, der über mindestens ein Dachzeichen zur Signalisierung eines Funktionszustandes des Taxifahrzeuges verfügt. Der Dachanzeigekörper 4 ist modular aufgebaut und weist einen hohlförmigen Hauptanzeigekörper 5 sowie einen über einen Halter 6 der Halteeinrichtung 2 gekoppelten hohlförmigen Zusatzanzeigekörper 7 auf. Der Hauptanzeigekörper 5 weist an gegenüberliegenden Flachseiten 8 einen lichtdurchlässigen Abschnitt 9 sowie einen lichtundurchlässigen Abschnitt 10 auf. Der zur Signalisierung einer Hauptfunktion des Dachanzeigekörpers 4 dienende Hauptanzeigekörper 5 kann aus einem Kunststoffmaterial bestehen, wobei der lichtdurchlässige Abschnitt 9 gelb eingefärbt und der lichtundurchlässige Abschnitt 10 schwarz eingefärbt ist. Der lichtdurchlässige Abschnitt 9 umfasst das Wort "TAXI", so dass durch Ein- oder Ausschalten von innerhalb des Hauptanzeigekörpers 5 angeordneten Lichtquellen der Hauptanzeigekörper 5 in unterschiedliche Signalisierungszustände verbracht werden kann. Befindet sich der Hauptanzeigekörper 5 beispielsweise in dem Funktionszustand "für Fahrgäste frei", werden die ein Hauptdachzeichen bildenden Flachseiten 8 des Hauptanzeigekörpers 5 beleuchtet. Soll sich der Hauptanzeigekörper 5 in den Funktionszustand "besetzt" befinden, werden die Flachseiten 8 nicht beleuchtet.

Der zur Signalisierung einer Zusatzfunktion des Dachanzeigekörpers 4 dienende Zusatzanzeigekörper 7 ist als eine Kappe ausgebildet, die an einer Stirnseite 11 des rahmenförmig ausgebildeten Halters 6 formschlüssig und/oder kraftschlüssig und/oder stoffschlüssig befestigt ist. Dem Zusatzanzeigekörper 7 ist eine nicht dargestellte rote Lichtquelle und eine grüne Lichtquelle zugeordnet, so dass zur verstärkten Signalisierung des Funktionszustandes des Hauptanzeigekörpers 5 eine Umfangsfläche 12 (Zusatzdachzeichen) im Funktionszustand "frei" grün leuchtet und im Funktionszustand "besetzt" rot leuchtet. Die Umfangsfläche 12 dient als Leuchtfläche, die eine Verstärkung des Signalisierungszustandes des Hauptdachzeichens 8 ermöglicht. Durch eine Steuerung wird der Zusatzanzeigekörper 7 synchron zu dem Hauptanzeigekörper 5 in den entsprechenden Signalisierungszustand verbracht.

Zwischen dem Hauptanzeigekörper 5 und dem Zusatzanzeigekörper 7 ist der rahmenförmige Halter 6 der Halteeinrichtung 2 angeordnet. Der Halter 6 weist eine den Raum zwischen dem Hauptanzeigekörper 5 und dem Zusatzanzeigekörper 7 trennende Trägerplatte auf, wobei auf einer dem Hauptanzeigekörper 5 zugewandten Seite eine oder mehrere Basislicht abstrahlende Lichtquellen und auf einer dem Zusatzanzeigekörper 7 zugewandten Seite eine rotes Licht abstrahlende Lichtquelle und grünes Licht abstrahlende Lichtquelle angeordnet sind. Der Halter 6 ist an den Stirnseiten 11 desselben zum einen kraftschlüssig und/oder formschlüssig und/oder stoffschlüssig mit einem offenen Rand des Hauptanzeigekörpers 5 und mit einem offenen Rand des Zusatzanzeigekörpers 7 verbunden. Der Halter 6 bildet somit einen Verbindungsbereich zwischen dem Hauptanzeigekörper 5 und dem Zusatzanzeigekörper 7.

An einer Schmalseite des Halters 6 schließt sich ein Fuß 13 an, der aus einer Schmalseitenebene des Hauptanzeigekörpers 5 bzw. Zusatzanzeigekörpers 7 abragt und an einem Dachrahmen 14 im Dachbereich des Fahrzeugs vorzugsweise lösbar befestigt ist. Zusätzlich umfasst die Halteeinrichtung 2 einen Magnetfuß 15, der - beabstandet zu dem Fuß 13 - von einer Schmalseite des Hauptanzeigekörpers 5 abragt und durch Nutzung von magnetischen Haltekräften den Hauptanzeigekörper 5 auf einer Dachfläche des Fahrzeugdachs 3 abstützt.

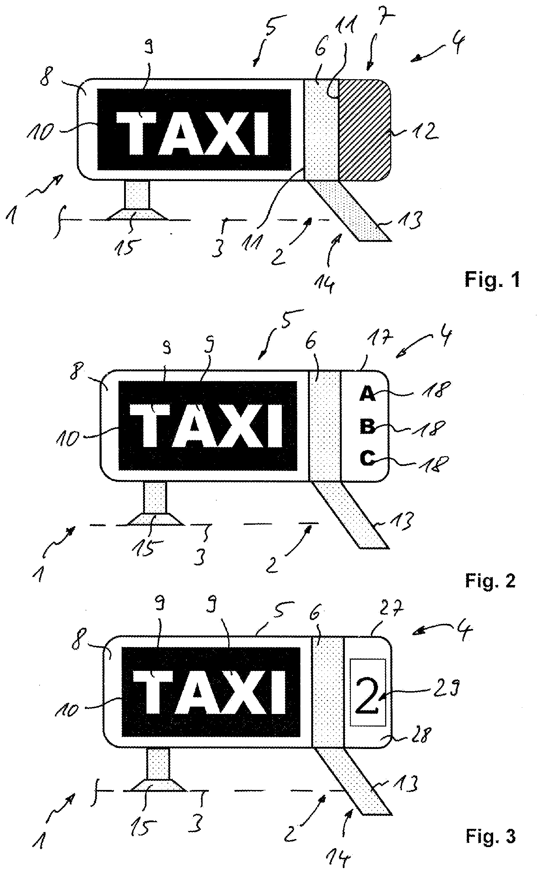

Nach einer zweiten Ausführungsform der Erfindung gemäß Figur 2 kann im Unterschied zu dem vorhergehenden Ausführungsbeispiel ein Zusatzanzeigekörper 17 vorgesehen sein, der Zusatzinformationen signalisiert, die nicht im Zusammenhang stehen mit dem Funktionszustand des Hauptanzeigekörpers 5. Beispielsweise kann der Zusatzanzeigekörper 17 als Zusatzdachzeichen 18 die Symbole "A", "B" und "C" aufweisen, die unterschiedliche Taxitarife repräsentieren. Diese Taxitarife können zeitlich und/oder in Abhängigkeit von der Größe des Taxifahrzeugs variieren. Beispielsweise kann bei Fahrten in einer Großstadt ein teurer Taxitarif "A" voreingestellt sein, während bei Überlandfahrten ein relativ günstiger Taxitarif "C" signalisiert wird. Zu diesem Zweck weist der Zusatzanzeigekörper 17 drei unterschiedliche Kammern auf, denen jeweils unterschiedliche Lichtquellen zugeordnet sind. Befindet sich der Zusatzanzeigekörper 17 in einem Signalisierungszustand "A", wird die dem Zusatzdachzeichen 18 "A" zugeordnete Kammer durch Einschalten der entsprechenden Lichtquelle beleuchtet, während die anderen Kammern nicht beleuchtet sind.

Die Signalisierung des Zusatzanzeigekörpers 17 erfolgt somit unabhängig von der Signalisierung des Hauptanzeigekörpers 5.

Gleiche Bauteile bzw. Bauteilfunktionen der Ausführungsbeispiele sind mit den gleichen Bezugszeichen versehen.

Nach einer dritten Ausführungsform der Erfindung gemäß Figur 3 kann die Dachanzeigevorrichtung im Unterschied zu den vorhergehenden Ausführungsbeispielen einen Zusatzanzeigekörper 27 aufweisen, der im Unterschied zu dem Hauptanzeigekörper 5 nicht beleuchtet wird, sondern lediglich an gegenüberliegenden Flachseiten 28 eine Beschriftung bzw. Nummer 29 zur Kennzeichnung des Taxifahrzeugs aufweist. Hierdurch lassen sich die Taxifahrzeuge eindeutig identifizieren.

Es versteht sich, dass die Hauptdachzeichen 8 und die Zusatzdachzeichen 12 in Abhängigkeit von dem Einsatzzweck unterschiedliche Symbole, alphanumerische Zeichen oder farbige Flächen aufweisen können. Sie können nicht beleuchtbar oder beleuchtbar ausgebildet sein.

Ferner versteht sich, dass in dem Fuß 13 eine elektrische Leitung integriert ist, damit die in dem Halter 6 angeordneten Lichtquellen mit elektrischem Strom versorgbar sind.

Der Hauptanzeigekörper 5 ist vorzugsweise als eine langgestreckte Haube ausgebildet, in der zur Ausleuchtung der Hauptdachzeichen 8 eine oder mehrere Lichtquellen angeordnet sein können.

Nach einer weiteren nicht dargestellten Ausführungsform der Erfindung kann der Zusatzanzeigekörper 7 auch lediglich als eine funktionslose Blendenkappe ausgebildet sein; und zwar dann, wenn eine zusätzliche Signalisierungsfunktion der Dachanzeigevorrichtung 1 nicht gewünscht ist. In Abhängigkeit von dem Einsatzzweck bzw. Einsatzort kann dann diese Blendenkappe durch die vorgenannten Zusatzanzeigekörper 7, 17, 27 ersetzt werden.

Die Erfindung ermöglicht vorteilhaft, dass beispielsweise durch rastendes Verbinden (Anflanschen) von Zusatzanzeigekörpern 7, 17, 27 an einem Rand eines Hauptanzeigekörpers 5 und/oder eines Halters 6 eine einfache Umkonfiguration der Dachanzeigevorrichtung 1 ermöglicht wird.

Nach einer nicht dargestellten weiteren Ausführungsform können auch mehrere Zusatzanzeigekörper 7 an der gleichen Stirnseite des Hauptanzeigekörpers 5 bzw. des Halters 6 und/oder an der gegenüberliegenden Stirnseite des Hauptanzeigekörpers 5 angebracht werden.

## Patentansprüche

1. Dachanzeigevorrichtung für Fahrzeuge, insbesondere für Taxifahrzeuge, mit mindestens einer Halteeinrichtung (2) zur Befestigung an einem Dachbereich des Fahrzeugs und mit mindestens einem fest mit der Halteeinrichtung (2) verbundenen Dachanzeigekörper (4), der ein Dachzeichen aufweist zur Signalisierung eines Funktionszustandes, wobei der Dachanzeigekörper (4) einen Hauptanzeigekörper (5) enthaltend ein Hauptdachzeichen (8) zur Signalisierung einer Hauptfunktion und mindestens einen Zusatzanzeigekörper (7, 17, 27) enthaltend ein Zusatzdachzeichen (12) zur Signalisierung einer Zusatzfunktion aufweist, wobei die Halteeinrichtung (2) einen Halter (6) aufweist, über den der Hauptanzeigekörper (5) mit dem Zusatzanzeigekörper (7) gekoppelt ist, wobei der Zusatzanzeigekörper (7) als eine Kappe ausgebildet ist, die an einer Stirnseite (11) des Halters (6) formschlüssig und/oder kraftschlüssig und/oder stoffschlüssig befestigt ist, wobei der Halter (6) eine den Raum zwischen dem Hauptanzeigekörper (5) und dem Zusatzanzeigekörper (7) trennende Trägerplatte aufweist und, wobei die Lichtquellen des Hauptanzeigekörpers (5) und des Zusatzanzeigekörper (7, 17) über eine in dem Fuß (13) der Halteeinrichtung (2) integrierten elektrischen Zuleitung ansteuerbar sind, wobei der Fuß (13) von dem in einem Verbindungsbereich zwischen dem Hauptanzeigekörper (5) und dem Zusatzanzeigekörper (7, 17) angeordneten Halter (6) abragt, **dadurch gekennzeichnet, dass** auf einer dem Hauptanzeigekörper (5) zugewandten Seite der Trägerplatte eine oder mehrere Basislicht abstrahlende Lichtquellen und auf einer dem Zusatzanzeigekörper (7) zugewandten Seite der Trägerplatte eine Licht abstrahlende Lichtquelle angeordnet sind.

2. Dachanzeigevorrichtung nach Anspruch 1, **dadurch gekennzeichnet, dass** das Hauptdachzeichen (8) und/oder das Zusatzdachzeichen (12) jeweils als eine Leuchtfläche ausgebildet sind, die in Abhängigkeit von dem aktuellen Funktionszustand des Fahrzeugs in einen Leuchtzustand oder in einen Nichtleuchtzustand verbringbar sind.

3. Dachanzeigevorrichtung nach Anspruch 1 oder 2, **dadurch gekennzeichnet, dass** das Zusatzdachzeichen (12) synchron zu dem Hauptdachzeichen (8) in einen anderen Signalisierungszustand bringbar ist.

4. Dachanzeigevorrichtung nach einem der Ansprüche 1 bis 3, **dadurch gekennzeichnet, dass** das Zusatzdachzeichen (18) unabhängig von dem Hauptdachzeichen (8) in einen Signalisierungszustand bringbar ist.

5. Dachanzeigevorrichtung nach einem der Ansprüche 1 bis 4, **dadurch gekennzeichnet, dass** das Hauptdachzeichen (8) an mindestens einer Flachseite des als eine langgestreckte Haube ausgebildeten Hauptanzeigekörpers (5) angeordnet ist, wobei die Flachseite durch in oder randseitig der langgestreckten Haube angeordnete Lichtquellen beleuchtbar ist.

6. Dachanzeigevorrichtung nach einem der Ansprüche 1 bis 5, **dadurch gekennzeichnet, dass** das Zusatzdachzeichen (12) an mindestens einer Flachseite (28) des als Kappe ausgebildeten Zusatzanzeigekörpers (7, 17, 27) angeordnet ist, wobei die Flachseite (28) durch in oder randseitig der Kappe angeordnete Lichtquellen beleuchtbar ist.

7. Dachanzeigevorrichtung nach einem der Ansprüche 1 bis 6, **dadurch gekennzeichnet, dass** das Hauptdachzeichen (8) durch alphanumerische Zeichen gebildet und dass das Zusatzdachzeichen (12) durch Symbole oder durch alphanumerische Zeichen oder durch farbige Flächen gebildet ist.

8. Dachanzeigevorrichtung nach einem der Ansprüche 1 bis 2, **dadurch gekennzeichnet, dass** das Zusatzdachzeichen (12) des Zusatzanzeigekörpers (27) nicht beleuchtbar ausgebildet ist.

## Claims

1. A roof display device for vehicles, in particular for taxi vehicles, having at least one holding apparatus (2) for fastening to a roof area of the vehicle and having at least one roof display body (4) which is securely connected to the holding apparatus (2), said roof display body having a roof sign for signaling a functional state, wherein the roof display device (4) has a main display body (5) including a main roof sign (8) for signaling a main function and at least one additional display body (7, 17, 27) including an additional roof sign (12) for signaling an additional function, wherein the holding apparatus (2) has a holder (6) via which the main display body (5) is coupled to the additional display body (7), wherein the additional display body (7) is formed as a cap which is fastened by form-fit and/or force-fit and/or material-fit to the front face (11) of the holder (6), wherein the holder (6) has a carrier plate which separates the space between the main display body (5) and the additional display body (7), and wherein the light sources of the main display body (5) and of the additional display body (7, 17) are controllable via an electrical lead which is integrated into the foot (13) of the holding apparatus (2), wherein the foot (13) protrudes from the holder (6) which is arranged in a securing area between the main display body (5) and the additional display body (7, 17), **characterized in that** one or several base light radiating light sources are arranged on a side of the carrier plate which is facing the main display body (5) and one light radiating light source is arranged on a side of the carrier plate which is facing the additional display body (7).

2. The roof display device according to Claim 1, **characterized in that** the main roof sign (8) and/or the additional roof sign (12) is/are in each case formed as a luminous surface which, depending on the current functional state of the vehicle, is able to be brought into a luminous state or into a non-luminous state.

3. The roof display device according to Claim 1 or 2, **characterized in that** the additional roof sign (12) is able to be brought into another signaling state synchronously with the main roof sign (8).

4. The roof display device according to any one of Claims 1 to 3, **characterized in that** the additional roof sign (12) is able to be brought into a signaling state independently of the main roof sign (8).

5. The roof display device according to any one of Claims 1 to 4, **characterized in that** the main roof sign (8) is arranged on at least one flat face of the main display body (5) which is formed as an elongated hood, wherein the flat face is able to be illuminated by light sources which are arranged in or at the edge of the elongated hood.

6. The roof display device according to any one of Claims 1 to 5, **characterized in that** the main roof sign (12) is arranged on at least one flat face (28) of the additional display body (7, 17, 27) which is formed as a cap, wherein the flat face (28) is able to be illuminated by light sources which are arranged in or at the edge of the cap.

7. The roof display device according to any one of Claims 1 to 6, **characterized in that** the main roof sign (8) is constituted by alphanumeric signs and **in that** the additional roof sign (12) is constituted by symbols or by alphanumeric signs or by colored panels.

8. The roof display device according to any one of any of Claims 1 to 2, **characterized in that** the additional roof sign (12) of the additional display body (27) is formed as not able to be illuminated.

## Revendications

1. Dispositif de toit de signalisation pour véhicules automobiles, en particulier pour taxis, avec au moins un dispositif de maintien (2) pour la fixation sur une section du toit du véhicule et avec au moins un corps de signalisation de toit (4), qui, relié fixement au dispositif de maintien (2), présente une enseigne de toit pour la signalisation d'un état fonctionnel,
sachant que le corps de signalisation de toit (4) présente un corps indicateur principal (5), qui comprend une enseigne de toit principale (8) pour la signalisation d'une fonction principale et au moins un corps indicateur supplémentaire (7, 17, 27), qui comprend une enseigne de toit supplémentaire (12) pour la signalisation d'une fonction supplémentaire.
sachant que le dispositif de maintien (2) présente un support (6) par l'intermédiaire duquel le corps indicateur principal (5) est couplé avec le corps indicateur supplémentaire (7), sachant que le corps indicateur supplémentaire (7) est réalisé en forme de capuchon, qui est fixé sur une face latérale (11) du support (6) par engagement géométrique et / ou par adhérence et / ou par fusion de matière,
sachant que le support (6) présente une plaque de support, qui sépare un espace entre le corps indicateur principal (5) et le corps indicateur supplémentaire (7)
sachant que les sources de lumière du corps indicateur principal (5) et du corps indicateur supplémentaire (7, 17) peuvent être commandées par l'intermédiaire d'une conduite électrique, qui est intégrée dans le pied (13) du dispositif de maintien (2), sachant que le pied (13) est en saillie du support (6) disposé dans un secteur de liaison, situé entre le corps indicateur principal (5) et le corps indicateur supplémentaire (7, 17), **caractérisé en ce que**, sur un côté d'une plaque de support orienté vers le corps indicateur principal (5), est/sont disposée/s une ou plusieurs sources de lumière émettant une lumière de base, et que, sur un côté de la plaque de support dirigé vers le corps indicateur supplémentaire (7), est disposée une source de lumière, qui rayonne une lumière.

2. Dispositif de signalisation pour toit selon la revendication 1, **caractérisé en ce que** l'enseigne de toit principale (8) et / ou l'enseigne de toit supplémentaire (12) sont réalisées respectivement en tant que surface lumineuse, qui, en fonction de l'état fonctionnel du véhicule, peuvent être mises à l'état éclairé ou non éclairé.

3. Dispositif de signalisation pour toît selon revendication 1 ou 2, **caractérisé en ce que** l'enseigne de toit supplémentaire (12) peut être mise dans un autre état de signalisation en synchronisation avec l'enseigne de toit principale (8).

4. Dispositif de signalisation pour toît selon l'une des revendications 1 à 3, **caractérisé en ce que** l'enseigne de toit supplémentaire (12) peut être mise dans un état de signalisation indépendamment de l'enseigne de toit principale (8).

5. Dispositif de signalisation pour toit selon l'une des revendications 1 à 4, **caractérisé en ce que** l'enseigne de toit principale (8) est disposée sur au moins un côté plat du corps indicateur principal (5), réalisé en forme de dôme allongé, sachant que le côté plat peut être éclairé par des sources de lumière disposées dans ou sur le côté du dôme allongé.

6. Dispositif de signalisation pour toît selon l'une des revendications 1 à 5, **caractérisé en ce que** l'enseigne de toit supplémentaire (12) est disposée sur au moins un côté plat (28) du corps indicateur supplémentaire (7, 17, 27) réalisé en forme de capuchon, sachant que le côté plat (28) peut être éclairé par des sources de lumière disposées dans ou sur le côté du capuchon.

7. Dispositif de signalisation pour toît selon l'une des revendications 1 à 6, **caractérisé en ce que** l'enseigne de toit principale (8) st formée par des caractères alphanumériques et que l'enseigne de toit supplémentaire (12) est formée par des symboles ou par des caractères alphanumériques ou par des surfaces colorées.

8. Dispositif de signalisation pour toît selon l'une des revendications 1 ou 2, **caractérisé en ce que** l'enseigne de toit supplémentaire (12) du corps indicateur supplémentaire (27) est de conception ne pouvant pas être éclairée.
